# EUROPÄISCHE PATENTSCHRIFT

(11) **EP 1 427 942 B1**
(45) Veröffentlichungstag und Bekanntmachung des Hinweises auf die Patenterteilung: **06.06.2007**
(21) Anmeldenummer: 02774322.8
(22) Anmeldetag: 11.09.2002
(51) Int. Cl.: F04C 14/24, B62D 6/02

(54) **LENKHILFPUMPE**
POWER-ASSISTED STEERING PUMP
POMPE D'ASSISTANCE DE DIRECTION

(30) Priorität: 13.09.2001 DE 10145224; 22.11.2001 DE 10157145
(43) Veröffentlichungstag der Anmeldung: 16.06.2004
(73) Patentinhaber: ixetic Bad Homburg GmbH, 61352 Bad Homburg v. d. H. (DE)
(72) Erfinder: FASSBENDER, Axel, 42111 Wuppertal (DE); LAUTH, Hans-Jürgen, 61267 Neu-Anspach (DE); VAN NGUYEN, Doan, 61267 Neu-Anspach (DE); PRINZHORN, Karl, 61206 Wöllstadt (DE); WEBERT, Dirk, 61350 Bad Homburg (DE)
(74) Vertreter: Duschl, Edgar Johannes
(86) Internationale Anmeldenummer: PCT/DE2002/003362
(87) Internationale Veröffentlichungsnummer: WO 2003/023227

(56) Entgegenhaltungen:
- US-A- 4 691 797
- US-A- 5 111 660
- PATENT ABSTRACTS OF JAPAN vol. 007, no. 095 (M-209), 21. April 1983 (1983-04-21) -& JP 58 018586 A (JIDOSHA KIKI KK), 3. Februar 1983 (1983-02-03)

## Beschreibung

Die Erfindung betrifft eine Pumpe, insbesondere Lenkhilfpumpe, mit einem Stromregelventil, wobei das Stromregelventil unter anderem einen hydraulischen Widerstand, wie eine Hauptdrossel, und einen Regelkolben enthält, wobei die Hauptdrossel gegebenenfalls durch einen Regelstift und eine Ringblende dargestellt sein kann. Derartige Pumpen sind bekannt. So wird bei Lenkhilfpumpen generell ein Stromregelventil verwendet, um bei steigender Pumpendrehzahl, die durch die steigende Drehzahl des Verbrennungsmotors verursacht wird, ab einem bestimmten Volumenstrom den Volumenstrom in die Lenkung zu begrenzen und den überflüssigen Volumenstrom direkt über das Stromregelventil wieder intern in der Pumpe zurückzuführen. Das bedeutet, dass zum Beispiel schon bei Leerlaufdrehzahl die Pumpe durch den Verbrennungsmotor mit einer derartigen Drehzahl angetrieben wird, dass der für die Lenkung benötigte Volumenstrom von zum Beispiel 10 l/min. zur Verfügung steht. Mit zunehmender Fahrgeschwindigkeit und damit mit zunehmender Drehzahl des Verbrennungsmotors wird dann der weiter ansteigende Pumpenvolumenstrom über das Stromregelventil aufgeteilt in den zur Lenkung fließenden Volumenstrom von ca. 10 l/min. und in einen zusätzlichen Abregelvolumenstrom, der in den Ansaugbereich der Pumpe zurückgeführt wird. Bekannt sind auch Stromregelventile, die mit zunehmender Verbrennungsmotordrehzahl, das heißt mit zunehmender Fahrgeschwindigkeit des Kraftfahrzeuges, den Volumenstrom zur Lenkung reduzieren, damit ein direkteres Lenkgefühl bei hoher Geschwindigkeit entsteht. Derartige Stromregelventile besitzen zum Beispiel einen Regelstift mit einem konischen Ende, der in einer Ringblende positioniert ist und bei sich weiter öffnendem Stromregelventil die Hauptdrossel, die durch diesen Regelstift und die Ringblende gebildet wird, mehr und mehr verschließt, so dass der zur Lenkung fließende Volumenstrom reduziert wird. Weitere Einflussmöglichkeiten auf den Volumenstrom sind bei derartigen Stromregeleinrichtungen aber nicht mehr möglich, so dass praktisch der an die Lenkung abgegebene Volumenstrom nur durch die Pumpendrehzahl beeinflusst wird.

Es sind auch Lenkhilfpumpen mit Stromregelventilen bekannt, bei denen die Hauptdrossel über einen Elektromagneten verstellt werden kann. Das bedeutet, dass im Bereich des Stromregelventils die Anordnung des Elektromagneten durch die Position der Hauptdrossel vorgegeben ist und damit die möglichen Einbaulagen des elektromagnetischen Ventils beschränkt sind. Auch ist der Einbauraum einer derartigen Pumpe größer und damit der Einbau in verschiedenen Motorräumen schwieriger. US 5111660 offenbart eine derartige Pumpe.

Es ist deshalb Aufgabe der Erfindung, eine Pumpe darzustellen, die diese Nachteile nicht aufweist. Die Aufgabe wird gelöst durch eine Pumpe, insbesondere Lenkhilfpumpe, mit einem Stromregelventil, wobei das Stromregelventil unter anderem einen hydraulischen Widerstand, wie eine Hauptdrossel, und einen Regelkolben enthält, wobei die Hauptdrossel gegebenenfalls durch einen Regelstift und eine Ringblende dargestellt sein kann, wobei parallel zur Hauptdrossel eine elektrisch verstellbare Bypassdrossel angeordnet ist. Erfindungsgemäß ist dadurch der Volumenstrom von der Pumpe zum Verbraucher, wie der Lenkung, zusätzlich elektrisch beeinflussbar. Vorzugsweise wird die Bypassdrossel von demselben Differenzdruck beaufschlagt wie die Hauptdrossel.

Eine erfindungsgemäße Ausführungsform der Pumpe zeichnet sich dadurch aus, dass die Bypassdrossel mit zunehmendem Ansteuerstrom die Fördermenge von der Pumpe zum Verbraucher reduziert. Eine weitere bevorzugte Ausführungsform erhöht mit zunehmendem Ansteuerstrom der Bypassdrossel die Fördermenge von der Pumpe zum Verbraucher.

Es wird nach Anspruch 1 eine Ausführungsform bevorzugt, bei welcher die elektrisch verstellbare Bypassdrossel an serienmäßigen Pumpen adaptierbar ist, so dass flexible Einbaulagen der Bypassdrossel möglich sind, unabhängig davon, wo in der Pumpe die am Stromregelventil angeordnete Hauptdrossel realisiert ist. Das hat besonders den Vorteil, dass je nach Einbausituation einer vorhandenen Pumpe in einem bestimmten Motorraum der Einbauort der zusätzlichen Bypassdrossel diesen Motorraumbedingungen angepasst werden kann, ohne die im Stromregelventil befindliche Hauptdrossel, und damit die Funktion des Stromregelventils, negativ zu beeinflussen.

Eine erfindungsgemäße Ausführungsform der Pumpe zeichnet sich dadurch aus, dass die Hauptdrossel der serienmäßigen Pumpe die Grundfördermenge des Volumenstromes für die Lenkung sicherstellt, vor allem im Fail-Safe-Fall, das heißt, wenn zum Beispiel die elektrische Versorgung ausfällt, und dass die elektrisch verstellbare Bypassdrossel zur zusätzlichen Variation der Fördermenge zum Verbraucher in Abhängigkeit verschiedener Parameter dient. Erfindungsgemäß können dabei die Parameter, die Einfluss auf die elektrisch verstellbare Bypassdrossel nehmen sollen, Parameter wie Fahrgeschwindigkeit, Motordrehzahl, Kurvenverhalten, Bremsverhalten, Fahrstabilität, Lenkwinkel, Lenkwinkelgeschwindigkeit, Raddrehzahlen oder Radschlupf sein.

Auch zeichnet sich eine erfindungsgemäße Pumpe dadurch aus, dass durch Verwendung der zusätzlichen elektrischen Bypassdrossel zur vorhandenen Hauptdrossel an serienmäßigen Pumpen Energieeinsparungen realisierbar sind. Weiterhin ist erfindungsgemäß eine Pumpe darstellbar, welche durch Verwendung der zusätzlichen elektrischen Bypassdrossel an serienmäßigen Pumpen die Verwendung für Fahrzeuge mit aktiven Lenksystemen ermöglicht.

Die Erfindung wird nun anhand der Figuren erläutert.

Figur 1 zeigt einen Hydraulikschaltplan einer erfindungsgemäßen Pumpe.

Figur 2 zeigt den Kennlinienbereich einer erfindungsgemäßen Pumpe.

Figur 3zeigt eine konstruktive Ausführung einer erfindungsgemäßen Pumpe.

Figur 4zeigt eine weitere konstruktive Ausführung.

Figur 5zeigt ebenfalls eine weitere Ausführung.

Figur 6zeigt ein schematisches Diagramm für ein Verfahren zur Ermittlung der Magnetstromansteuerung der Bypassdrossel.

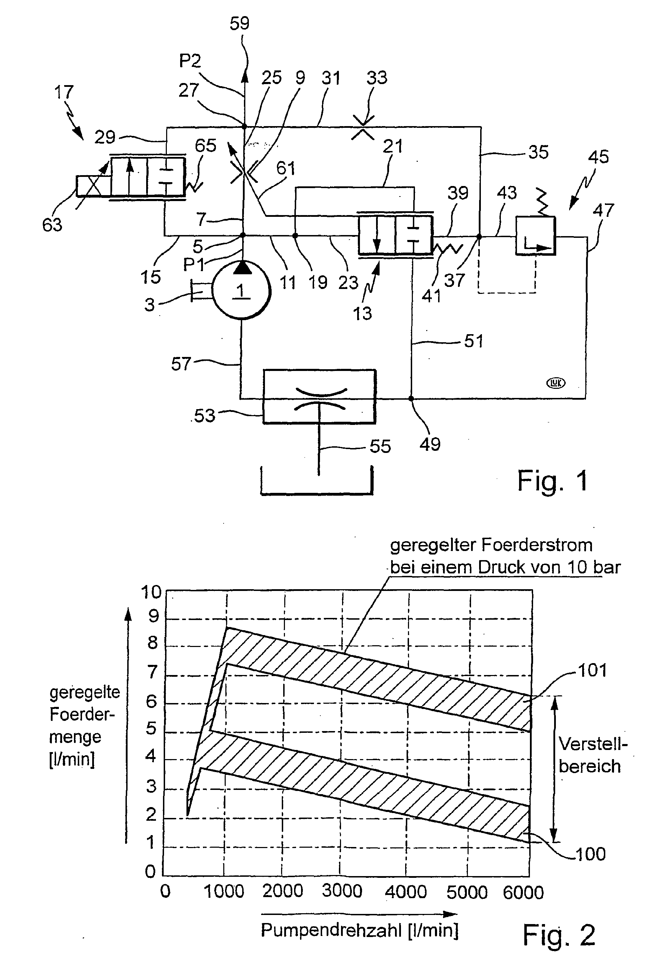

In Figur 1 wird eine erfindungsgemäße Pumpenanordnung in Form eines Hydraulikschaltplanes dargestellt. Eine Pumpeneinheit 1 wird über eine Antriebswelle 3 von einem hier weiter nicht dargestellten Antrieb, wie zum Beispiel einer Riemenscheibe, von einem Verbrennungsmotor angetrieben. Mit zunehmender Drehzahl fördert die Pumpe 1 einen Volumenstrom in den Verbindungspunkt 5. Vom Verbindungspunkt 5 führt eine Verbindung 7 zu einer variablen Hauptdrossel 9, die durch ein Drosselsymbol mit einem Pfeil dargestellt ist, eine weitere Verbindung 11 führt zu einem Regelkolben eines Regelventils 13, und eine dritte Verbindung 15 führt zu einer elektrisch verstellbaren Bypassdrossel 17. Die Leitung 11 führt zu einem Verbindungspunkt 19, von dem eine Leitung 21 zum Regelkolben des Regelventils 13 führt, während eine Steuerleitung 23 auf die linke Seite des Regelkolbens wirkt. In der Steuerleitung 23 wirkt der am Pumpenausgang anstehende Druck P1, der über den Verbindungspunkt 5 in den Verbindungen 15, 7, 11 und 21 ebenfalls wirksam ist. Über die Hauptdrossel 9 kann ein Volumenstrom mittels Verbindung 25 zum Verbindungspunkt 27 strömen, in welchem auch eine Verbindung 29 von der elektrisch verstellbaren Bypassdrossel 17 mündet. Ferner führt vom Knotenpunkt 27 eine Verbindungsleitung 31 zu einer Drossel 33 und über eine Verbindung 35 weiter zu einem Verbindungspunkt 37, in welchem eine Steuerleitung 39 auf die rechte Seite des Regelkolbens wirksam wird. Ferner wirkt auf die rechte Seite des Regelkolbens des Regelventils 13 eine Feder 41. Vom Verbindungspunkt 37 geht eine Steuerleitung 43 weiter zu einem Druckbegrenzungspiloten 45 und über eine Leitung 47 zu einem Verbindungspunkt 49, in welchem die Abflussleitung 51 des Regelventils 13 einmündet. Über eine Injektoreinrichtung 53, in der die vom Stromregelventil und Druckbegrenzungsventil fließenden Ölströme aus einer Tankleitung 55 Öl mitreißen können, fließt das vom Stromregelventil 13 und/oder vom Druckpiloten 45 abströmende Öl über die Pumpenansaugleitung 57 wieder der Pumpeneinheit 1 zu.

### Die Funktion der Pumpeneinrichtung ist folgende:

Mit zunehmender Drehzahl der Pumpeneinheit 1 nimmt ein Volumenstrom über die Hauptdrossel 9 zu, welcher zum Verbraucher 59, wie zum Beispiel einer Servolenkung, strömt. Mit zunehmendem Volumenstrom über die Hauptdrossel 9 nimmt die Druckdifferenz P1 minus P2 an der Hauptdrossel zu. Die Druckdifferenz P1 minus P2, die zusammen mit der Feder 41 auf den Regelkolben des Regelventils 13 wirkt, wird schließlich so groß, dass der Druck P1 den Regelkolben gegen den Druck P2 und die Feder 41 nach rechts verstellen kann, so dass ein Volumenstrom über den Regelkolben abfließen kann und wiederum dem Ansaugbereich 57 der Pumpe 1 zugeführt wird. Da in dieser Darstellung der Regelkolben 13 über eine mechanische Verbindung 61 mit der variablen Hauptdrossel 9 verbunden ist, wird bei einer zunehmenden Öffnungsbewegung des Kolbens 13 die variable Hauptdrossel 9 weiter geschlossen, so dass mit zunehmender Pumpendrehzahl ein zum Verbraucher fließender Volumenstrom reduziert wird. Damit ist der zum Verbraucher 59 strömende Volumenstrom durch die mechanischen Gegebenheiten des Regelventils 13 und der verstellbaren Hauptdrossel 9 vorgegeben und nicht weiter veränderbar. Um nun zusätzliche Parameter auf die Höhe des Volumenstromes zum Verbraucher 59 wirksam werden zu lassen, nutzt die Erfindung parallel zur Hauptdrossel 9 die elektrisch verstellbare Bypassdrossel 17, welche mit zunehmendem Ansteuerstrom auf einen Elektromagneten 63 gegen eine Federkraft 65 den Kolben der Bypassdrossel stufenlos aufschieben kann und damit einen zusätzlichen Volumenstrom in den Knotenpunkt 27 und damit zum Verbraucher 59 ermöglicht. Damit ist unabhängig von den mechanischen Gegebenheiten des Regelkolbens des Regelventils 13 und der Hauptdrossel 9 ein Volumenstromkennfeld realisierbar.

Figur 2 zeigt die Bandbreite eines derartigen Volumenstromkennfeldes. Über der Pumpendrehzahl in U/min, hier von 0 bis 6000 Umdrehungen, ist die geregelte Fördermenge zum Verbraucher 59 in l/min, hier zwischen 0 und 10 l/min, aufgetragen. Dabei ist ein Förderstrom-Kennlinienband 100 zu erkennen, welches bei etwa 600 U/min einen mittleren Volumenstrom von 4,5 l/min aufweist, der sich mit zunehmender Drehzahl bis hin zu 6000 U/min auf einen mittleren Volumenstrom von 2 l/min absenkt. Dieses Volumenstromband entspricht zum Beispiel dem Volumenstrom, der durch den Regelkolben des Regelventils 13 und die variable Hauptdrossel 9 eingestellt wird, wobei die Bandbreite alle zusätzlichen Toleranzen im System beinhalten soll. Mit der elektrisch verstellbaren Bypassdrossel 17 aus Figur 1 ist durch Öffnen der Bypassdrossel ein zusätzlicher Volumenstrom zum Verbraucher darstellbar, der bis hin zur maximalen Öffnung der Bypassdrossel 17 zu dem Kennlinienband 101 in der Figur 2 führt. Somit sind dabei bei etwa 1000 U/min 8 1/min realisierbar, welche durch die variable Hauptdrossel 9 bei 6000 U/min auf etwa 6,5 l/min abgesenkt werden. Durch die stufenlose Verstellung der variablen Hauptdrossel 17 sind alle Kennlinien zwischen der Kennlinie 100 und 101 realisierbar. So kann zum Beispiel für das Parkieren ein großer Volumenstrom bereitgestellt werden, der bei hoher Fahrgeschwindigkeit abgesenkt wird, um das Gefühl der Lenkkräfte am Lenkrad direkter darzustellen. Genauso kann aber entsprechend anderen Fahrzeugparametern wie Kurvengeschwindigkeit, Bremsverhalten, Schlupf der Räder usw. eine entsprechende Förderstrom-Kennlinie für die Lenkung eingestellt werden. Ebenso ist es möglich, durch die variable Hauptdrossel den zunächst zum Parkieren benötigten großen Volumenstrom relativ schnell auf einen Minimal-Volumenstrom abzusenken und damit zur Energieeinsparung beizutragen.

Prinzipiell kann dabei die Vorgehensweise so sein, dass die variable Hauptdrossel 9 die Grundfördermenge der Pumpe sicherstellt. Durch den Regelstift, der mit dem Regelkolben des Regelventils 13 mechanisch verbunden ist, können wie bisher verschiedene drehzahlabhängige Kennlinien der Grundfördermenge realisiert werden. Durch die elektrisch verstellbare Bypassdrossel 17, die parallel zu der Hauptdrossel 9 geschaltet ist und von dem selben Differenzdruck P1 minus P2 beaufschlagt wird, kann die Fördermenge der Pumpe zusätzlich variiert werden. Je nach konstruktiver Auslegung kann die Bypassdrossel 17 mit zunehmendem Ansteuerstrom für den Magneten 63 die Fördermenge der Pumpe 1 zum Verbraucher 59 reduzieren oder erhöhen. Für das Fail-Safe-Verhalten einer derartigen Pumpeneinrichtung ist es daher auch von Vorteil, dass beim Ausfall der elektrischen Versorgung die Funktion der mechanischen Hauptdrossel 9 erhalten bleibt, was bei einer reinen elektrisch verstellbaren Hauptdrossel schwieriger zu realisieren wäre.

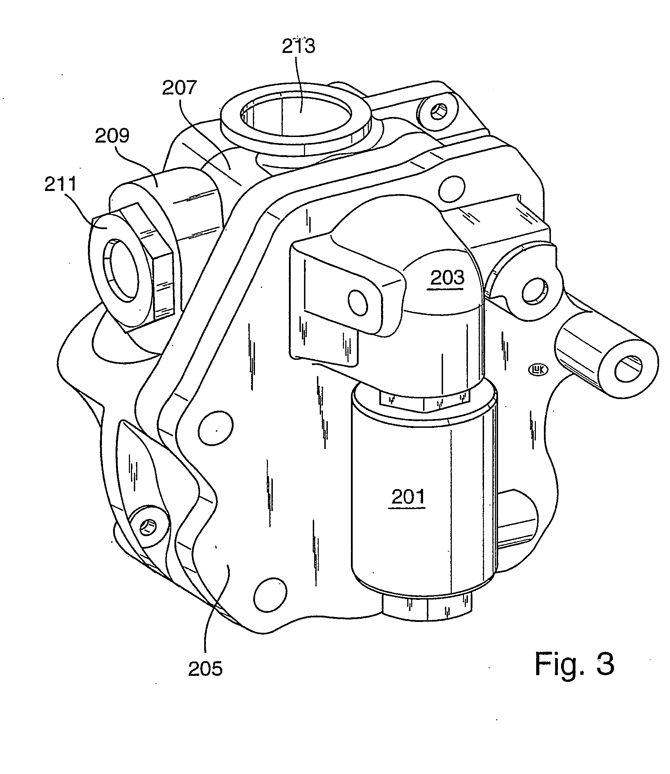

In Figur 3 ist die konstruktive Adaption einer derartigen variablen Hauptdrossel an einem serienmäßigen Pumpengehäuse dargestellt. Das elektrisch betätigbare Bypass-Drosselventil 201 ist über ein Anschlussstück 203 an einem Deckel 205 einer serienmäßigen Lenkhilfpumpe befestigt. Der Deckel 205 verschließt ein Pumpengehäuse 207, in welchem in einem Ventilgehäuse 209 das bisher vorhandene Stromregelventil und die variable Hauptdrossel angeordnet sind, welche hier nicht sichtbar sind. Der Volumenstromzufluss zum Verbraucher wird durch einen Anschluss 211 an der Pumpe hergestellt, und der Rückfluss vom Verbraucher und vom Tank erfolgt über den Anschluss 213. Je nach baulichen Gegebenheiten im Motorraum der bisher verwendeten, hier dargestellten Pumpe kann über eine Änderung des Deckels 205 bzw. des Anschlussteils 203 eine Reihe von Variationen der Position des elektrischen Ventils 201 erreicht werden, ohne die anderen baulichen Gegebenheiten der Pumpe oder gar des Fahrzeugs zu verändern.

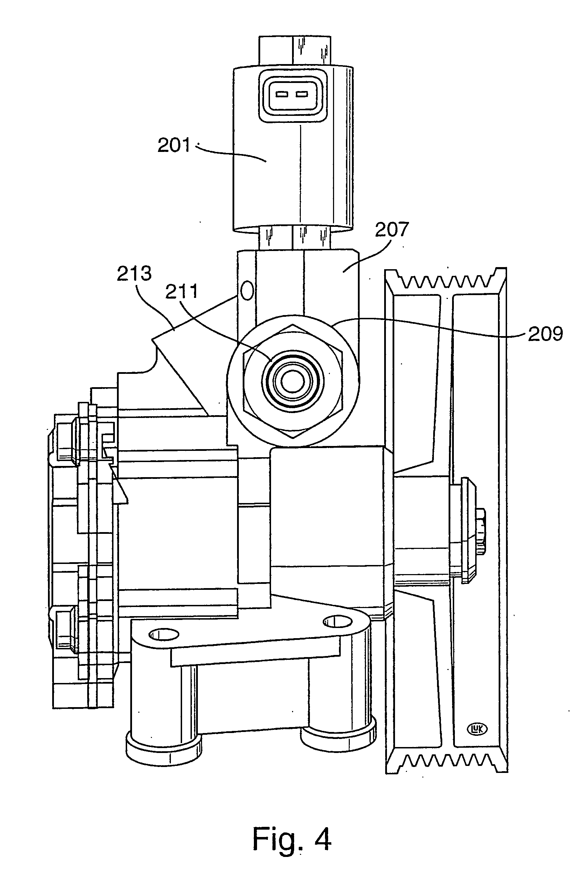

In Figur 4 ist die Adaption einer derartigen elektrischen Bypassdrossel auf einer anderen serienmäßigen Pumpe dargestellt. Das elektrische Bypass-Drosselventil 201 ist hier auf dem Pumpengehäuse 207 oberhalb des Stromregelventilgehäuses 209 angebracht, so dass sich hier ein vertikaler Anbau entsprechend den Einbaugegebenheiten dieser Pumpe ergibt. Der Druckanschluss zum Verbraucher 211 und der Sauganschluss der Pumpe 213 sind bei dieser Pumpe in anderen Positionen angeordnet, so dass entsprechend diesen Gegebenheiten und dem Einbauraum im Fahrzeug hier eine freie Stelle zur Positionierung der Bypassdrossel in anderer Weise gefunden werden kann.

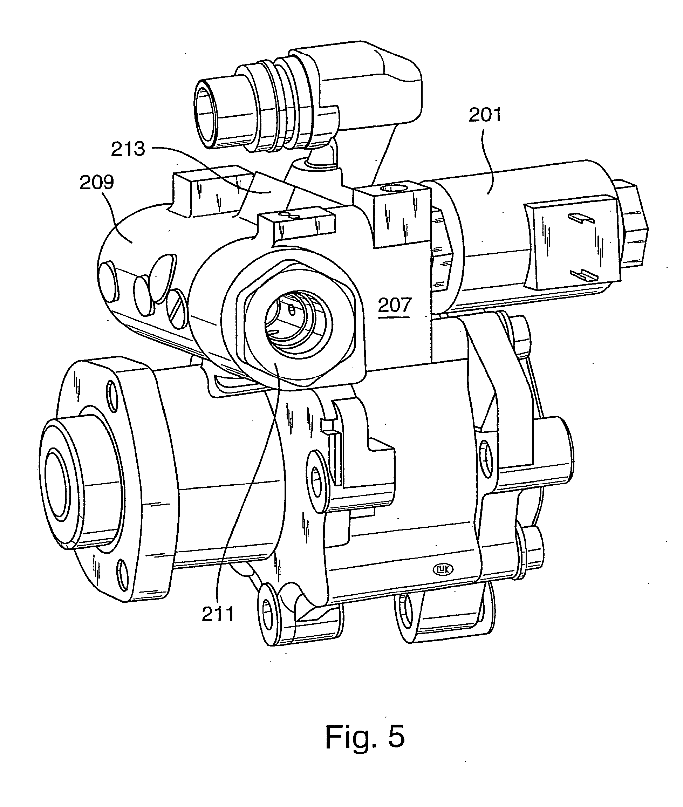

In Figur 5 ist der gleiche Pumpentyp wie in Figur 4 mit einem axialen Anbau der elektrischen Bypassdrossel 201 dargestellt. Je nach Gegebenheiten am Einbauort der Pumpe im Motorraum kann hier der Platz hinter der Pumpe zur Adaption des Magnetventils 201 benutzt werden, wenn in den Bereichen um das Ventilgehäuse 209 und im Ansaugbereich 213 oder im Druckausgangsbereich 211 kein Platz vorhanden ist. Man erkennt schon an diesen Darstellungen, dass die zusätzliche Bypassdrossel mit flexiblen Einbaulagen eine einfache Adaption an serienmäßigen Pumpen ermöglicht.

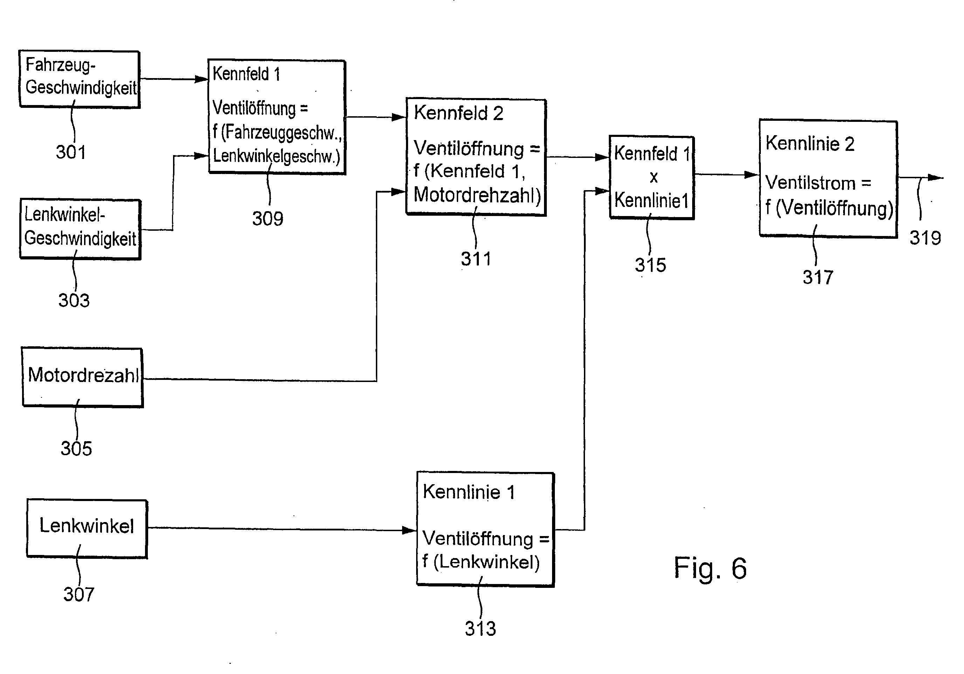

Figur 6 zeigt ein schematisches Diagramm für ein Verfahren zur Ermittlung der Magnetstromansteuerung der Bypassdrossel 201. Dabei wird der Magnetstrom aufgrund mehrerer Eingangsgrößen durch eine elektronische Rechnereinrichtung ermittelt und entsprechend ein Magnetstrom ausgegeben. Als Eingangsgrößen für den Algorithmus zur Ermittlung des Magnetstromes dienen die Fahrgeschwindigkeit 301, die Lenkwinkelgeschwindigkeit 303, die Drehzahl 305 des Verbrennungsmotors und der Lenkwinkel 307. Die Lenkwinkelgeschwindigkeit 303 wird über eine Funktionseinheit als erste Eingangsgröße für ein Kennfeld 309 erzeugt. Als zweite Eingangsgröße für das Kennfeld 309 dient die Fahrzeuggeschwindigkeit 301. Im Kennfeld 309 wird somit ein Ventilöffnungswert als Funktion von Fahrzeuggeschwindigkeit 301 und Lenkwinkelgeschwindigkeit 303 abgebildet. Das Kennfeld 309 dient wiederum als erste Eingangsgröße für ein zweites Kennfeld 311, welches als zweite Eingangsgröße die Motordrehzahl 305 verarbeitet. Im Kennfeld 311 wird also ein Ventilöffnungswert als Funktion des Kennfeldes 309 und der Verbrennungsmotordrehzahl 305 abgebildet. Das zweite Kennfeld 311 wiederum dient als erste Eingangsgröße für eine Funktionseinheit 315, für welche als zweite Eingangsgröße eine Kennlinie 313 dient. Die Kennlinie 313 wird aus dem Lenkwinkelsignal 307 gebildet und stellt einen Ventilöffnungswert als Funktion des Lenkwinkels 307 dar. Die Ausgangsgröße der Funktionseinheit 315 ist Eingangsgröße für eine Funktionseinheit 317, in welcher die Magnetstromkennlinie für den Magnetstrom 319 der Bypassdrossel 201 als Funktion des Ventiföffnungswertes erzeugt wird. Der Magnetstrom 319 wird dann dem Elektromagneten der Bypassdrossel 201 zur Verfügung gestellt.

## Patentansprüche

1. Pumpe, insbesondere Lenkhilfpumpe, mit einem Stromregelventil (13), wobei das Stromregelventil (13) unter anderem einen hydraulischen Widerstand, wie eine Hauptdrossel (9), und einen Regelkolben enthält, wobei die Hauptdrossel (9) gegebenenfalls durch einen Regelstift und eine Ringblende dargestellt sein kann, wobei parallel zur Hauptdrossel (9) eine elektrisch verstellbare Bypassdrossel (17) angeordnet ist, **dadurch gekennzeichnet, dass** die elektrisch verstellbare Bypassdrossel (17) an serienmäßigen Pumpen über ein in seiner Position variabel gestaltbares Anschlussstück (203) an einem Deckel (205) adaptiert ist,
oder auf dem Pumpengehäuse (207) vertikal oberhalb des Stromregelventilgehäuses (209) adaptiert ist,
oder an der Rückseite des Pumpengehäuses (207) axial hinter dem Stromregelventilgehäuse (209) adaptiert ist.

2. Pumpe nach Anspruch 1, **dadurch gekennzeichnet, dass** der Volumenstrom von der Pumpe zum Verbraucher (59), wie Lenkung, zusätzlich elektrisch beeinflussbar ist.

3. Pumpe nach Anspruch 2, **dadurch gekennzeichnet, dass** die Bypassdrossel (17) von demselben Differenzdruck beaufschlagt wird wie die Hauptdrossel (9).

4. Pumpe nach Anspruch 3, **dadurch gekennzeichnet, dass** die Bypassdrossel (17) mit zunehmendem Ansteuerstrom die Fördermenge von der Pumpe zum Verbraucher (59) reduziert.

5. Pumpe nach Anspruch 3, **dadurch gekennzeichnet, dass** die Bypassdrossel (17) mit zunehmendem Ansteuerstrom die Fördermenge von der Pumpe zum Verbraucher (59) erhöht.

6. Pumpe nach einem der vorhergehenden Ansprüche, **dadurch gekennzeichnet, dass** die Hauptdrossel (9) der serienmäßigen Pumpen die Grundfördermenge des Volumenstromes für die Lenkung (59) sicherstellt, vor allem im Fail-Safe-Fall, und die elektrisch verstellbare Bypassdrossel (17) zur zusätzlichen Variation der Fördermenge zum Verbraucher (59) in Abhängigkeit verschiedener Parameter dient.

7. Pumpe nach einem der vorhergehenden Ansprüche, **dadurch gekennzeichnet, dass** die Parameter für die elektrisch verstellbare Bypassdrossel (17) Parameter wie Fahrgeschwindigkeit (301), Motordrehzahl (305), Kurvenverhalten, Bremsverhalten, Fahrstabilität, Lenkwinkel (307), Lenkwinkelgeschwindigkeit (303), Raddrehzahlen und/ oder Radschlupf sein können.

8. Pumpe nach einem der vorhergehenden Ansprüche, **dadurch gekennzeichnet, dass** durch Verwendung der zusätzlichen elektrischen Bypassdrossel (17) an serienmäßigen Pumpen Energieeinsparungen realisierbar sind.

9. Pumpe nach einem der vorhergehenden Ansprüche, **dadurch gekennzeichnet, dass** durch Verwendung der zusätzlichen elektrischen Bypassdrossel (17) an serienmäßigen Pumpen aktive Lenksysteme realisierbar sind.

## Claims

1. A pump, in particular a power steering pump, with a flow control valve (13), where the flow control valve (13) includes among other elements a hydraulic resistance, such as a main throttle valve (9) and a control piston, where the main throttle valve (9) may possibly be represented by a control pin and an annular orifice plate, there being an electrically adjustable bypass throttle valve (17) positioned parallel to the main throttle valve (9), **characterized in that** on series-production pumps the electrically adjustable bypass throttle valve (17) is adapted to a cover (205) by means of a connector (203) whose position can be arranged variably, or is adapted on the pump housing (207) vertically above the flow control valve housing (209), or is adapted on the back side of the pump housing (207) axially behind the flow control valve housing (209).

2. The pump according to Claim 1, **characterized in that** the volume flow from the pump to the consumer (59), such as the steering system, can be additionally influenced electrically.

3. The pump according to Claim 2, **characterized in that** the bypass throttle valve (17) is subjected to the same differential pressure as the main throttle valve (9).

4. The pump according to Claim 3, **characterized in that** the bypass valve (17) reduces the volume transported by the pump to the consumer (59) as the triggering current increases.

5. The pump according to Claim 3, **characterized in that** the bypass valve (17) increases the volume transported by the pump to the consumer (59) as the triggering current increases.

6. The pump according to one of the preceding claims, **characterized in that** the main throttle valve (9) of the seriose-production pumps ensures the basic transport volume of the volume flow for the steering system (59), especially in the fail-safe case, and the electrically adjustable bypass-throttle valve (17) serves to additionally vary the volume transported to the consumer (59), depending on various parameters.

7. The pump according to one of the preceding claims, **characterized in that** the parameters for the electrically adjustable bypass throttle valve (17) may be parameters such as driving speed (301), engine speed (305), cornering performance, brake performance, driving stability, steering angle (307), steering angle speed (303), wheel rotation speeds and/or wheel slip.

8. The pump according to one of the preceding claims, **characterized in that** energy savings are realizable on series-production pumps through use of the supplemental electrical bypass throttle valve (17).

9. The pump according to one of the preceding claims, **characterized in that** active steering systems are realizable on series-production pumps through use of the supplemental electrical bypass throttle valve (17).

## Revendications

1. Pompe, notamment pompe d'assistance de direction, comprenant une vanne de régulation de débit (13), la vanne de régulation de débit (13) renfermant entre autres une résistance hydraulique, telle qu'un étranglement principal (9), et un piston de régulation, l'étranglement principal (9) pouvant éventuellement être constitué par un pointeau de régulation et un diaphragme annulaire, un étranglement de dérivation (17) réglable électriquement étant agencé en parallèle à l'étranglement principal (9), **caractérisée en ce que** l'étranglement de dérivation (17) réglable électriquement est, sur des pompes de série, adapté sur un couvercle (205), par l'intermédiaire d'une pièce de raccordement (203) de configuration variable quant à sa position,
ou bien est adapté sur le côté arrière du carter de pompe (207) axialement derrière le carter de vanne de régulation (209).

2. Pompe selon la revendication 1, **caractérisée en ce que** le débit volume de la pompe vers le récepteur (59), tel qu'un système de direction, peut en supplément être influencé par voie électrique.

3. Pompe selon la revendication 2, **caractérisée en ce que** l' étranglement de dérivation (17) est soumis à la même pression différentielle que: l'étranglement principal (9).

4. Pompe selon la revendication 3, **caractérisée en ce que** l'étranglement de dérivation (17), pour un courant de commande croissant, réduit le volume débité par la pompe vers le récepteur (59).

5. Pompe selon la revendication 3, **caractérisée en ce que** l'étranglement de dérivation (17), pour un courant de commande croissant, augmente le volume débité par la pompe vers le récepteur (59) .

6. Pompe selon l'une des revendications précédentes, **caractérisée en ce que** l'étranglement principal des pompes de série, assure le volume refoulé de base du débit volume pour le système de direction (59), avant tout dans le mode de sécurité positive, et l'étranglement de dérivation (17) réglable électriquement sert à la variation supplémentaire du volume refoulé vers le récepteur (59), en fonction de différents paramètres.

7. Pompe selon l'une des revendications précédentes, **caractérisée en ce que** les paramètres pour l'étranglement de dérivation (17) réglable électriquement peuvent être des paramètres tels que la vitesse de circulation (301), la vitesse de rotation du moteur (305), le comportement en courbe, le comportement au freinage, la stabilité de marche, l'angle de braquage (307), la vitesse d'angle de braquage (303), les vitesse de rotation de roue et/ou le patinage de roue.

8. Pompe selon l'une des revendications précédentes, **caractérisée en ce que** par l'utilisation de l'étranglement de dérivation électrique (17) supplémentaire, sur des pompes de série, il est possible de réaliser des économies d'énergie.

9. Pompe selon l'une des revendications précédentes, **caractérisée en ce que** par l'utilisation de l'étranglement de dérivation électrique (17) supplémentaire, sur des pompes de série, il est possible de réaliser des systèmes actifs de direction.
